# EUROPÄISCHE PATENTANMELDUNG

(11) **EP 0 622 771 A1**
(43) Veröffentlichungstag der Anmeldung: **02.11.1994**
(21) Anmeldenummer: 94250109.9
(22) Anmeldetag: 28.04.1994
(51) Int. Cl.: G09B 21/00

(54) **Vorrichtung zur tastbaren Darstellung bewegter Information**

(30) Priorität: 28.04.1993 DE 4313905
(71) Anmelder: Fricke, Jörg, D-58644 Iserlohn (DE)
(72) Erfinder: Fricke, Jörg, D-58644 Iserlohn (DE)

(57) **Zusammenfassung**

Mittels einer beweglichen Anzeigevorrichtung, deren Anzeigefläche einem oder mehreren Fingern tastbare Information bietet, kann eine größere Informationsmenge stückweise abgetastet werden. Gegenstand der Erfindung ist eine Anzeigevorrichtung, deren nicht seitlich bewegte Tastelemente derart geformt und angeordnet sind und so gesteuert werden, daß beim seitlichen Verschieben der dargestellten Information ein ähnlicher Tasteindruck hervorgerufen wird wie beim Gleiten der Finger über feststehende tastbare Information.

In der Anzeigefläche (1) sind bewegliche Taststifte (6) so angeordnet, daß in mindestens einer Dimension der Abstand benachbarter Taststifte höchstens 1.6 mm beträgt. Piezoelektrische Biegestreifen (7) werden durch phasenbezogenes Aufschalten einer Wechselspannung so gesteuert, daß sie mittels der Taststifte (6) eine Reihe verschiedener Kräfte auf die aufliegenden Finger ausüben können. Die Biegestreifen (7) und die elektronischen Schalter (10) sind auf Leiterplatten (8) montiert. Die Ansteuerung der Taststifte kann wahlweise so erfolgen, daß die virtuelle Gesamtinformation entweder festzustehen oder sich entgegengesetzt zur Bewegung der Anzeigefläche zu bewegen scheint.

## Beschreibung

Die Erfindung betrifft eine Vorrichtung, die einem oder mehreren vorderen Fingergliedern, die auf der Anzeigefläche der Vorrichtung aufliegen, ohne sich relativ zur Anzeigefläche zu bewegen, Information in tastbarer Form darbietet. Der Benutzer kann den Ausschnitt aus der Gesamtinformation wählen, der auf der Anzeigefläche dargestellt wird.

Die tastbare Darstellung von Information soll sehbehinderten und blinden Personen den Zugang zu Information ermöglichen, die in schriftlicher oder graphischer Form von elektronischen Signalverarbeitungsgeräten und Datenverarbeitungsanlagen ausgegeben wird. In Systemen, die entweder Information darstellen, die an entfernter Stelle aufgenommen wurde, ohne eine Transformation in eine andere Sinnesmodalität zu bewirken (sogenannte Telesensorik), oder die Information darstellen, die dem Erleben einer simulierten Umgebung entspricht (sogenannte virtuelle Realität) sollte Information über Objekte, die "berührt" werden, auch tastbar dargestellt werden. Vorrichtungen, die einen kleinen veränderbaren Ausschnitt aus der darstellbaren Gesamtinformation präsentieren, zeichnen sich gegenüber Geräten, die die Gesamtinformation mit gleicher Genauigkeit vollständig darstellen, durch geringeren Herstellungsaufwand, geringeres Gewicht und kleinere Abmessungen aus.

Eine tastbare Anzeige zur Darstellung kontinuierlich bewegter Punktschrift wird in DE 3 033 078 A1 beschrieben. Hierbei werden die Schriftpunkte durch Stifte repräsentiert, die, am Außenrand eines Rades angeordnet, unter dem Lesefinger durchgeführt werden und elektromechanisch angehoben oder versenkt werden können. Eine ähnliche Vorrichtung benutzt Kugeln in einem endlosen Band (EP 0 123 205).
Gebräuchliche Braillezellen besitzen sechs oder acht Stifte, die elektromechanisch angehoben werden können, so daß sie über die Anzeigefläche ragen. Es ist eine Vorrichtung zur Darstellung von Punktschrift bekannt, die eine oder mehrere derartige Braillezellen enthält, die auf einem seitlich verschiebbaren Schlitten montiert sind (Antonio Parreno, Pedro J. Magallon: "Teresa'80: An 80 character single cell Braille line" in "Computers for handicapped persons", Wolfgang Zagler (Hrsg.), Wien 1992). Die zeichenweise darstellbare Zeile wird im folgenden als virtuelle Gesamtinformation bezeichnet.

Ein Gerät, das eine ortsfeste sogenannte vibrotaktile Anzeige enthält, deren Stifte mittels piezoelektrischer Biegestreifen bewegt werden, wird beschrieben in: James C. Bliss et. al.: "Optical-to-Tactile Image Conversion for the Blind" in IEEE Transactions on Man-Machine Systems, Vol. MMS-11, No. 1, März 1970. Jeder Biegestreifen der besagten Anzeige kann mittels Spannungsimpulsen zum Schwingen mit einer Frequenz von etwa 230 Hz angeregt werden. Die Form darzustellender Objekte wird durch vibrierende Stifte repräsentiert.
Ein anderes Gerät enthält eine vibrotaktile Anzeige, die vom Benutzer über ein Digitalisiertablett geführt werden kann (Gregg C. Vanderheiden et. al.: "A dual information class model for providing access to computers with graphic user interfaces for people who are blind", in: Proceedings of the First World Congress on Technology, Washington 1991). Hierdurch wird beim Benutzer der Eindruck hervorgerufen, es würde eine Fläche von der Größe des Tabletts mit tastbarer Information bereitstehen; auch diese flächenhafte Information wird im folgenden als virtuelle Gesamtinformation bezeichnet.

Eine Anzeige mit einem Rad oder einem Band, das tastbare Information unter den Fingern hindurchführt, kann dieselben Tastempfindungen hervorrufen, die auch beim gewohnten Gleiten der Finger über feststehende tastbare Information entstehen. Jedoch sind Gewicht und Abmessungen derartiger Vorrichtungen so hoch, daß sie nur feststehend betrieben werden, wodurch eine Steuerung der Abtastgeschwindigkeit durch den Benutzer und die Orientierung in strukturierter Information nicht in derselben Weise möglich sind wie beim Lesen tastbarer Information, die insgesamt auf einer realen Fläche dargestellt wird. Als Ausgabegerät eines tragbaren Rechners (sogenannte Laptops und Notebookcomputer) sind derartige Vorrichtungen wegen ihres Gewichts und ihrer Abmessungen nicht geeignet. Außerdem erlaubt der Setz- und Rücksetzmechanismus dieser Geräte meist nur eine Leserichtung, wodurch Rücksprünge und das Bearbeiten von Text erschwert werden.
Geräte mit beweglichen Braillezellen erlauben dem Benutzer, Lesegeschwindigkeit und -richtung durch Führen der Anzeige mit seiner Hand zu bestimmen, jedoch rufen sie nicht dieselben Tastempfindungen wie beim Gleiten der Finger über feststehende Punktschrift hervor, weil die auf diesen Anzeigen dargestellte Information nur um jeweils ein ganzes Zeichen springen kann statt eine als kontinuierlich empfundene Bewegung auszuführen. Geräte mit nur einer beweglichen Braillezelle haben zudem den Nachteil, daß der Benutzer mit den drei rechten Fingern der rechten Hand keine Vorabinformation über die rechts vom dargestellten Buchstaben befindlichen Zeichen erhält. Daher wird der Benutzer bei der Zeichenerkennung nicht durch Annahmen unterstützt, die er aus dem Wissen über die Wortlänge oder über die Position des Satzendes ableiten kann.
Die erfolgreiche Benutzung vibrotaktiler Anzeigen erfordert eine im Durchschnitt recht lange Übungszeit. Außerdem gestattet die Ansteuerung nur eine annähernd sinusförmige Schwingung der Taststifte. Die Anstiegszeit und die Frequenz der Taststiftbewegung sind daher nicht unabhängig voneinander einstellbar. Die auf dem Markt befindlichen vibrotaktilen Anzeigen werden zur Darstellung von Schwarzschriftzeichen und Graphik benutzt, eignen sich jedoch nicht zur Darstellung von Punktschriftzeichen in üblicher Größe, weil die Stifte seitliche Abstände von etwa 2 mm haben, während der seitliche Abstand der Schriftpunkte im Bereich 2.5 bis 3.1 mm liegt.

Ein Ziel der Erfindung besteht darin, eine tastbare Anzeige so auszubilden, daß sie den auf der Anzeigefläche ruhenden vorderen Fingergliedern Tastempfindungen übermittelt, die denen ähnlich sind, die von feststehender tastbarer Information hervorgerufen wird, wenn die Finger über sie gleiten. Die Anzeige soll den Eindruck seitlich bewegter tastbarer Information hervorrufen können ohne daß Tastelemente auf der Anzeigefläche seitlich bewegt werden. Die elektronische Steuerung der Tastelemente soll so ausgebildet sein, daß ein Teil dieser Steuerung in der Anzeigevorrichtung enthalten sein kann und dieser Teil mit dem Rest der Steuerung mittels einer seriellen Schnittstelle verbunden ist. Der in die Anzeigevorrichtung integrierte Teil der elektronischen Steuerung soll unter beliebigen Betriebsbedingungen eine so geringe Verlustwärme abgeben, daß auf besondere Maßnahmen zur Wärmeableitung verzichtet werden kann. Bei Verwendung als Punktschriftanzeige soll eine optionale Zusatzanzeige den Fingern rechts neben dem Lesefinger eine grobe Vorabinformation über die folgenden Zeichen ermöglichen.

Diese Aufgaben werden erfindungsgemäß durch die im folgenden beschriebene Vorrichtung gelöst. Eine Anzeigeplatte, die als Auflagefläche für eine oder mehrere Fingerspitzen dient und eben oder gewölbt sein kann, enthält in Führungslöchern Taststifte, deren Längsachsen senkrecht oder nahezu senkrecht zur Oberfläche der Anzeigeplatte stehen. Der Abstand zwischen den Längsachsen benachbarter Taststifte ist zumindest in seitlicher Richtung, also der Bewegungsrichtung beim Lesen einer Punktschriftzeile, nicht größer als 1.6 mm. Mittels je eines Taststiftes können piezoelektrische Biegestreifen eine Reihe verschieden großer Kräfte auf die aufliegende Haut ausüben. Die Biegestreifen werden gesteuert, indem jeweils eine oder mehrere ihrer Elektroden über je eine phasenbezogen gesteuerte Halbbrücke von einer gemeinsamen Wechselspannungsquelle auf den gewünschten Spannungswert geladen werden. Die Halbbrücken werden von den Ausgängen eines Schieberegisters mit Ausgangsregister gesteuert.

Ein durch die Erfindung erreichter Vorteil besteht darin, daß eine seitliche Verschiebung der dargestellten Information in so kleinen Schritten erfolgen kann, daß der Benutzer eine kontinuierliche Bewegung wahrnimmt. Die Darstellung mittels nichtvibrierender Stifte trägt vorteilhafterweise zu Tastwahrnehmungen bei, die denen beim Abtasten entsprechender realer Objekte bis auf das Fehlen der Reibungskräfte zwischen Haut und Objektoberfläche ähnlich sind. Ein weiterer Vorteil ist, daß die Anzeigevorrichtung so ausgeführt werden kann, daß sie die Abmessungen handelsüblicher Braillezellen in Höhe und Tiefe nicht wesentlich überschreitet. Die Ansteuerung der Biegestreifen mittels Wechselspannung bietet den Vorteil, daß die gesteuerten Halbbrücken bei geeigneter Ansteuerung eine sehr geringe Verlustwärme abgeben unabhängig von der Geschwindigkeit, mit der die dargestellte Information verschoben wird. Ein weiterer Vorteil, der sich aus der Art der Ansteuerung ergibt, besteht darin, daß, falls zeitweilig eine Vibration der Stifte erwünscht ist, die Frequenz der Vibration durch die Wahl der Anstiegszeit nicht nach unten eingeschränkt ist.

Im folgenden wird die Erfindung anhand von Zeichnungen erläutert, die lediglich einen Ausführungsweg darstellen.

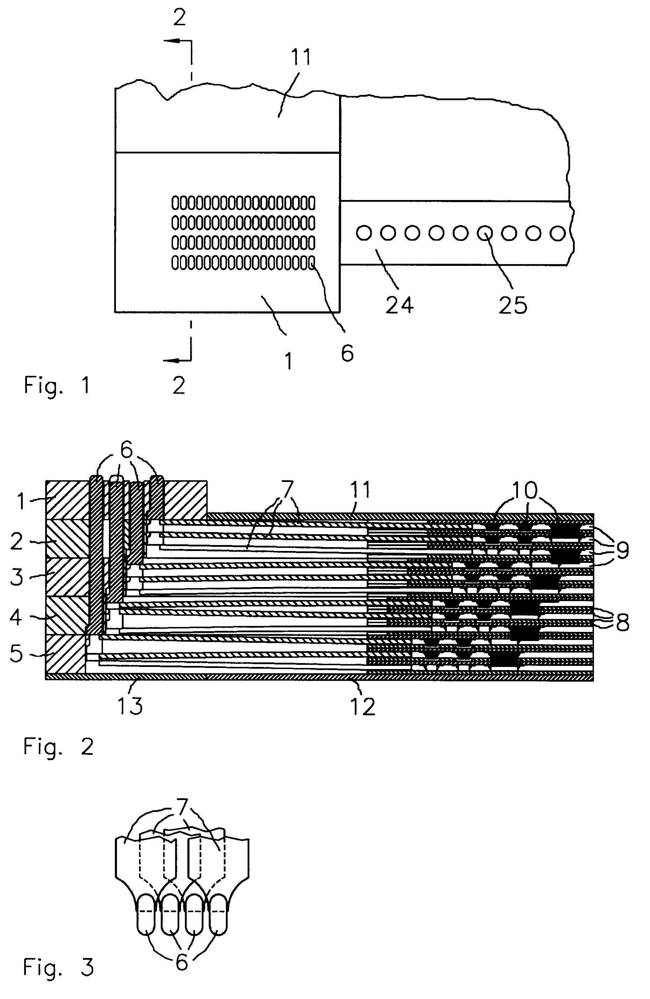

Fig. 1 zeigt ausschnittweise eine Anzeigevorrichtung von oben.
Fig. 2 zeigt einen Schnitt durch die Anzeige der Fig. 1 entlang der Linie 2 - 2.
Fig. 3 verdeutlicht die Form und Anordnung der Biegestreifen, die die Taststifte bewegen.

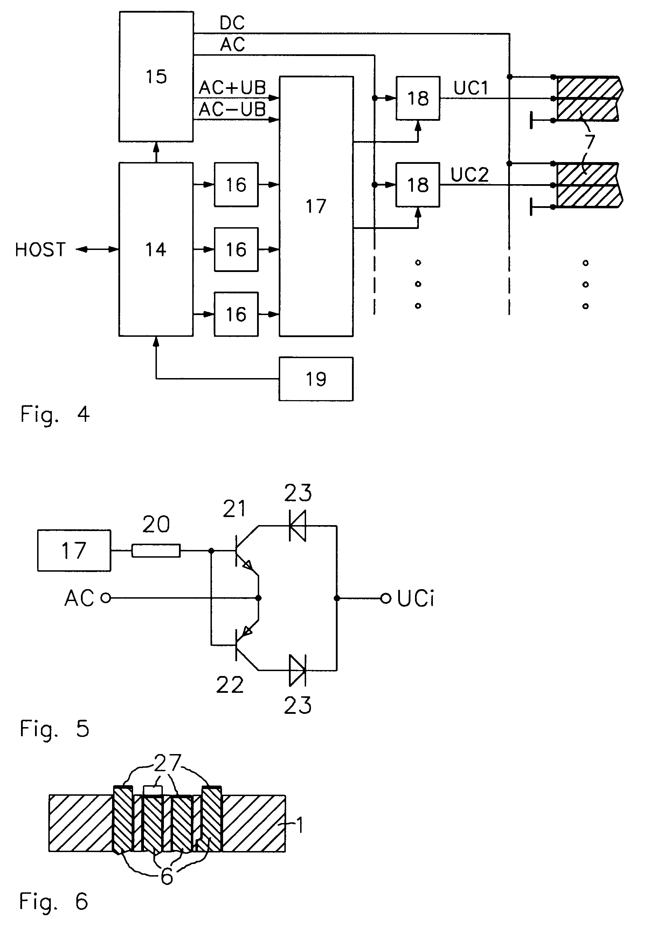

Fig. 4 ist ein Blockdiagramm der elektronischen Steuerung der Anzeige.
Fig. 5 zeigt die Einzelheiten des Blockes 18 in Fig. 4.
Fig. 6 stellt einen Schnitt durch die Anzeigefläche dar.

Als Ausführungsbeispiel dient ein Gerät, bei dem die Anordnung der Tastelemente besonders zur Darstellung von Braillezeichen geeignet ist.
Die Platten (1) bis (5) aus elektrisch nichtleitendem Material führen in 72 Öffnungen die Taststifte (6), die ebenfalls aus elektrisch nichtleitendem Material gefertigt sind, einen annähernd rechteckigen Querschnitt haben und so angeordnet sind, daß ihre oberen Enden in der Anzeigeplatte (1) vier Zeilen und achtzehn Spalten bilden. Die Längsachsen benachbarter Stifte (6) haben innerhalb der Zeilen einen Abstand von 1 mm, von Zeile zu Zeile einen Abstand von 2.5 mm. Am unteren Ende weist jeder Taststift (6) eine Verbreiterung auf, die das Herausfallen des Stiftes verhindert. Die Biegestreifen (7) sind 2.5 mm breit. Die Taststifte (6) jeweils einer Zeile können von Biegestreifen (7) angehoben werden, die in drei Ebenen angeordnet sind und an den freien Enden auf etwa 0.8 mm verjüngt sind. Die Biegestreifen (7) innerhalb einer Ebene sind mittels elektrisch leitfähigem Klebstoff zwischen jeweils zwei Leiterplatten (8) eingeklebt, deren Abstand von Distanzstücken (9) vorgegeben ist. Die Leiterplatten (8) tragen auch die elektronischen Bauelemente (10), die das Schieberegister (17) und die gesteuerten Halbbrücken (18) zur Ansteuerung der Biegestreifen (7) bilden. Für die Bauelemente (10) ist durch Ausfräsungen in den Leiterplatten (8) Platz geschaffen, da die Höhe der Bauelemente (10) größer als die Höhe der Distanzstücke (9) ist.
Zwölf verschieden geformte Einheiten aus je sechs Biegestreifen (7), zwei Leiterplatten (8), zwei Distanzstücken (9) und den zugehörigen Bauelementen (10) sind miteinander und mit der Deckplatte (11) und der Bodenplatte (12) verschraubt. Die verwendeten bimorphen Biegestreifen (7) führen im Betrieb eine Spannung zwischen den beiden äußeren Elektroden. Die Biegestreifen (7) sind deshalb hinsichtlich ihrer Polarität so ausgerichtet, daß die Biegestreifen (7) jeder zweiten der besagten 12 Einheiten in Bezug auf die übrigen Biegestreifen (7) "über Kopf" eingebaut sind. Dadurch führen alle äußeren Elektroden, die sich bei Biegung der Biegestreifen (7) in entgegengesetzte Richtung berühren können, gleiches elektrisches Potential. Die Deckplatte (11) und die Bodenplatte (12) bilden die Verbindung zwischen den Leiterplatten (8) und den Platten (1) bis (5), mit denen sie ebenfalls verschraubt sind. Die Bodenplatte (13) kann zu Reinigungs- oder Justagezwecken entfernt werden.
Eine elektronische Baugruppe (14), die einen Mikrocontroller einschließlich der zu seinem Betrieb notwendigen elektronischen Bauelemente und Bausteine enthält und die im folgenden kurz "Mikrocontrollereinheit (14)" genannt wird, steuert eine Spannungswandlereinheit (15). Die Spannungswandlereinheit (15) liefert eine Gleichspannung (DC), eine sinusförmige Wechselspannung (AC), deren Spitze-Spitze-Spannung gleich der Größe der Gleichspannung (DC) ist, und zwei in Bezug auf die Wechselspannung (AC) symmetrische Gleichspannungen der Größe +/- UB, die als Betriebsspannung eines Schieberegisters mit Ausgangsregister (17) dienen. Eine äußere Elektrode jedes bimorphen Biegestreifens (7) liegt auf Nullpotential, die jeweils andere führt die Gleichspannung (DC). Die mittlere Elektrode jedes Biegestreifens (7) kann mittels jeweils einer gesteuerten Halbbrücke (18) von der Wechselspannung (AC) aufgeladen oder entladen werden. Die Halbbrücken (18) werden von einem Schieberegister mit Ausgangsregister (17) gesteuert. Das Schieberegister mit Ausgangsregister (17) wird von der Mikrocontrollereinheit (14) mittels dreier Optokoppler (16) gesteuert, die die Daten, den Schiebetakt und den Takt für das Ausgangsregister übertragen. Jede gesteuerte Halbbrücke (18) besteht aus einem Basisvorwiderstand (20), zwei komplementären Transistoren (21) und (22) und zwei Dioden (23). Die Halbbrücken (18) werden so gesteuert, daß sie nur dann vom gesperrten in den leitenden Zustand übergehen, wenn die Potentialdifferenz zwischen der Wechselspannung (AC) und der jeweiligen Steuerelektrode eine Spannung von einigen Volt nicht übersteigt.
Die Mikrocontrollereinheit (14) ist über eine serielle Schnittstelle mit dem Gerät, hier mit "HOST" bezeichnet, verbunden, das die darzustellende Information liefert. Je nach Ausprägung der Vorrichtung, die die tastbare Anzeige aufnimmt, empfängt und verwaltet die Mikrocontrollereinheit (14) jeweils eine Zeile oder eine Seite der darzustellenden Information. Mittels einer Sensoreinheit (19) mit einer Auflösung von mindestens 0.125 mm stellt die Mikrocontrollereinheit (14) den momentanen Ort der Anzeige fest und errechnet daraus den darzustellenden Ausschnitt aus der verwalteten Information und die Höhe der Taststifte.
Eine zusätzliche Anzeigefläche (24) rechts neben der Anzeigeplatte (1) enthält Taststifte (25), deren Durchmesser und Abstand größer sind als bei den Taststiften (6). Die Taststifte (25) können ebenfalls von piezoelektrischen Biegestreifen angehoben werden und bieten den Fingern rechts neben dem Lesefinger Vorabinformation über den Text rechts von der Stelle, die mittels der Taststifte (6) dargestellt wird. Da dieser Vorabinformation im allgemeinen nur die verbleibende Wortlänge und die Position des Zeilenendes entnommen werden soll, um die Zeichenerkennung zu unterstützen, genügt es, zwischen Braillezeichen und Leerstellen zu unterscheiden. Dargestellt wird daher mit jeweils einem Taststift (25) die Oder-Verknüpfung aller Schriftpunkte einer Zeichenspalte.
Während die Taststifte (6) der oben beschriebenen Vorrichtung unmittelbar die aufliegende Haut berühren, können in einer anderen Ausführung der Erfindung elastische Bänder (26) die oberen Enden der Taststifte abdecken. Dadurch wird verhindert, daß bei einer geringen Bewegung der Haut in Bezug auf die Anzeigefläche die einzelnen Taststifte (6) wahrgenommen werden.

Andere Ausführungen der Erfindung können von der hier beschriebenen Ausführung abweichen zum Beispiel in der Zahl, Form und Anordnung der Taststifte, der Biegestreifen und der Leiterplatten, in der Art, der Befestigung und der Kontaktierung der Biegestreifen, im Aufbau der gesteuerten Halbbrücken, im zeitlichen Verlauf der Wechselspannung oder in der Art der Größe, die den darzustellenden Ausschnitt aus der Gesamtinformation bestimmt. Insbesondere können die Taststifte in Matrixform mit gleichen Abständen in x- und y-Richtung angeordnet sein, die besagte Matrix kann elf Zeilen enthalten bei Taststiftabständen von 1 mm, um vollständige Braillezeichen und Graphik darstellen zu können, die Biegestreifen können mittels Kontaktfedern kontaktiert und befestigt sein, die Halbbrücken können Feldeffekttransistoren enthalten und die Wechselspannung kann einen rampenförmigen zeitlichen Verlauf haben.

Erfindungsgemäße Anzeigevorrichtungen können, bei geeigneter Anordnung der Tastelemente, vorteilhaft sowohl herkömmliche Braillezellen als auch vibrotaktile Anzeigen ersetzen, insbesondere auch in den Geräten, die oben bei der Erläuterung des Standes der Technik erwähnt wurden. In Vorrichtungen der Bereiche Telesensorik und virtuelle Realität kann beispielsweise jedes vordere Fingerglied des Benutzers auf einer Tastanzeige aufliegen. Insbesondere können bestehende Vorrichtungen, die auf die Finger des Benutzers ortsabhängige Kräfte ausüben, mit erfindungsgemäßen Tastanzeigen ausgestattet werden. Dadurch wird nicht nur die Gesamtform, sondern auch die Feinstruktur der Oberfläche von Objekten übermittelt.

## Patentansprüche

1. Vorrichtung, die einem oder mehreren vorderen Fingergliedern, die auf der Anzeigefläche der Vorrichtung ruhen, Information in tastbarer Form darbietet, dadurch gekennzeichnet, daß
- die Informationsdarbietung mittels in Richtung ihrer Längsachse beweglich gelagerter Stifte erfolgt, deren Längsachsen senkrecht oder annähernd senkrecht zur Oberfläche der Anzeigefläche stehen, wobei der Abstand zwischen den Längsachsen benachbarter Stifte in mindestens einer Dimension höchstens 1.6 mm beträgt;
- Biegestreifen, die den inversen piezoelektrischen Effekt nutzen, mittels besagter Stifte eine Reihe verschiedener Kräfte auf die Haut der aufliegenden Finger ausüben können;
- jeder der besagten Biegestreifen gesteuert wird, indem seine Steuerelektrode in einer geeigneten zeitlichen Folge auf eine Wechselspannung geschaltet wird.

2. Vorrichtung nach Anspruch 1, dadurch gekennzeichnet, daß die Schaltkreise, die die besagten Steuerelektroden mit der besagten Wechselspannung verbinden bzw. von ihr trennen, jeweils aus zwei Dioden und zwei komplementären Transistoren sowie bei Bedarf einem Widerstand bestehen.

3. Vorrichtung nach den Ansprüchen 1 oder 2, dadurch gekennzeichnet, daß die besagten Stifte so angeordnet sind, daß sie in der Anzeigefläche vier Zeilen bilden und daß benachbarte Stifte innerhalb einer Zeile einen Mittelachs-Abstand von 1 mm oder weniger haben.

4. Vorrichtung nach den Ansprüchen 1, 2 oder 3, dadurch gekennzeichnet, daß neben den besagten Stiften der Hauptanzeigefläche eine zusätzliche Zeile aus Stiften gebildet wird, wobei der Längsachs-Abstand dieser zusätzlichen Stifte nicht notwendig derselbe wie der der Stifte der Hauptanzeigefläche, jedoch nicht größer als 3.1 mm ist.

5. Vorrichtung nach den Ansprüchen 1, 2, 3 oder 4, dadurch gekennzeichnet, daß die oberen Enden der Stifte in jeweils einer Zeile mittels eines elastischen Bandes abgedeckt sind.

6. Vorrichtung nach den Ansprüchen 1, 2, 3, 4 oder 5, dadurch gekennzeichnet, daß die besagten Biegestreifen in mehreren Ebenen angeordnet sind und daß die Biegestreifen jeder Ebene jeweils zwischen zwei Leiterplatten befestigt und elektrisch mit diesen Leiterplatten verbunden sind, wobei die besagten Leiterplatten auch einige oder alle der Bauelemente tragen und elektrisch miteinander verbinden, die der Steuerung der Biegestreifen dienen.

7. Vorrichtung nach den Anspruch 6, dadurch gekennzeichnet, daß bimorphe piezoelektrische Biegestreifen verwendet werden und die Biegestreifen hinsichtlicher ihrer Polarität so ausgerichtet sind, daß die Polaritäten jeweils zweier Biegestreifen, die in benachbarten Ebenen angeordnet sind, zueinander entgegengesetzt sind.

8. Vorrichtung nach den Ansprüchen 1, 2, 3, 4, 5, 6 oder 7, dadurch gekennzeichnet, daß die Steuerung den dargestellten Ausschnitt der Information in Abhängigkeit von der Position der Anzeigefläche bestimmt und daß dies wahlweise entweder so geschieht, daß die virtuelle Gesamtinformation relativ zu dem die Anzeigefläche enthaltenden Gerät ruht, oder so, daß die virtuelle Gesamtinformation sich in der Richtung bewegt, die der Bewegungsrichtung der Anzeigefläche entgegengesetzt ist.
